(19)

Europäisches
Patentamt

European
Patent Office

Office européen
des brevets

(11) **EP 4 545 915 A1**

(12) **EUROPEAN PATENT APPLICATION**

(43) Date of publication:
**30.04.2025   Bulletin 2025/18**

(21) Application number: **23205171.4**

(22) Date of filing: **23.10.2023**

(51) International Patent Classification (IPC):
**G01F 1/667** (2022.01)        **G01F 25/10** (2022.01)
**G01F 1/66** (2022.01)

(52) Cooperative Patent Classification (CPC):
**G01F 1/667; G01F 1/662; G01F 1/668; G01F 25/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Kamstrup A/S**
**8660 Skanderborg (DK)**

(72) Inventors:
- **Dupont, Sune Hoveroust**
  **8660 Skanderborg (DK)**
- **Kristensen, Mick Althoff**
  **8660 Skanderborg (DK)**

(74) Representative: **Patentanwälte Hemmer Lindfeld Frese**
**Partnerschaft mbB**
**Wallstraße 33a**
**23560 Lübeck (DE)**

(54) **ULTRASONIC FLOW METER AND METHOD FOR EVALUATING THE STATE OF A MEDIUM INSIDE AN ULTRASONIC FLOW METER**

(57)     The invention refers to an ultrasonic flow meter (2) comprising a flow channel (4), at least one ultrasonic transducer (16,18) located in the flow channel or on a wall (5) of the flow channel (4) and a processing unit (14) connected to this at least one ultrasonic transducer (16,18), the processing unit (14) being configured such that it controls the at least one ultrasonic transducer (16,18), wherein the processing unit (14) comprises an analysing module (36) being configured such that it evaluates the state of a medium inside the flow channel (4) by analysing a ringdown behaviour-damping of the signal of the at least one ultrasonic transducer (16,18), and a method for evaluating the state of a medium inside an ultrasonic flow meter (2).

Fig. 7

EP 4 545 915 A1

**Description**

The invention refers to an ultrasonic flow meter, a fluid consumption meter comprising such an ultrasonic flow meter and a method for evaluating the state of a medium inside an ultrasonic flow meter.

Ultrasonic flow meters are used in fluid consumption meters to measure the volume of the fluid flowing through the meter and to record a water consumption at the site of a water consumer or they are used for energy metering in heat distribution networks.

A known problem in ultrasonic flow meters is possible cavitation in the fluid causing measuring errors in the ultrasonic fluid. DE 10 2017 011 201 B4 discloses to selectively detect noise which may occur from cavitation in the liquid.

It is the object of the invention to provide an ultrasonic flow meter, a fluid consumption meter and a method allowing an improved detection of cavitation.

This object is achieved by an ultrasonic flow meter having the features defined in claim 1, by a fluid consumption meter having the features defined in claim 12 and by a method having the features defined in claim 13. Preferred embodiments are defined in the dependent subclaims, the following description and the accompanying drawings.

The ultrasonic flow meter comprises a flow tube or flow channel which is configured to receive a fluid or conduct a liquid flow. The flow channel may be connected to an inlet connection and to an outlet connection of the flow meter. There is located at least one ultrasonic transducer in said flow channel or on a wall of said flow channel. In a preferred embodiment there may be two ultrasonic transducers spaced from one another to create an ultrasonic measuring section inside the flow channel. A processing unit is connected to this at least one ultrasonic transducer, wherein the processing unit is configured such that it controls the at least one ultrasonic transducer. The processing unit preferably is configured to carry out a flow measurement by use of the ultrasonic transducer or ultrasonic transducers. According to the invention the processing unit comprises an analysing module which is configured such that it evaluates the state of a medium inside the flow channel, e.g. a liquid flowing along the flow channel. The processing unit is configured such that it analyses a damping of the at least one ultrasonic transducer to evaluate the state of the medium. The ultrasonic transducer is an oscillator that is damped by its physical environment. The damping allows the detection of certain states like dry running, air bubbles in the liquid or cavitation which may cause errors in the flow measurement of the ultrasonic flow meter. If such a non-desired state is detected, the processing unit may output a failure signal and/or for example stop the flow measurement.

Advantageously the analysing module is configured such that a ringdown behaviour of the at least one ultrasonic transducer is used for analysing the damping.

A different ringing or ringdown behaviour is an indication of different states of the medium flowing in the flow channel. The ringdown analysis is a particularly good way of estimating the damping. Other ways are to measure the amplitude of the oscillation relative to an undamped oscillation or to measure a shift in the resonance frequency of the oscillation from the natural frequency. In the following text the words ringing or ringdown are used interchangeably.

Instead of analysing the ringdown behaviour the analysing module may be configured such that another parameter can be studied. Thus, for example the analysing module may be configured such that a shift in the oscillation frequency from the natural frequency can also be used for analysing the damping.

In a further alternative to using a ringdown behaviour or a frequency shift the analysing module may be configured such that a change in the voltage amplitude of the oscillation of the at least one ultrasonic transducer can be studied, when this transducer has been exited with a sinusoidal drive signal. Such a change in amplitude is related to the damping factor of the oscillating system. An increase in damping causes a decrease in amplitude. This alternative has the advantage that it is relatively simple to monitor the amplitude.

The analysing module may be configured in a possible embodiment such that it samples voltage signals from the at least one ultrasonic transducer and analyses the damping, for example by studying the ringdown behaviour or ringing, on basis of these sampled voltage signals. The sampling can be done in periodic intervals. The signal considered for analysis of the damping, for example during a ringdown behaviour or ringing, is a signal of an undriven oscillatory system comprising the ultrasonic transducer. By periodically sampling the voltage signal generated by the ultrasonic transducer for example a ringing or ringdown curve is detected. The curve dampens over time. Dependent on the status of the medium or liquid in the flow channel, being part of the oscillatory system, the damping characteristics are different resulting in different ringing curves or ringdown curves.

For analysing the damping, for example by studying the ringdown behaviour, the analysing module may be configured such that it analyses or samples the signal strength and/or the decay over time of a voltage signal measured on the ultrasonic transducer. The signal preferably is determined in a state in which the ultrasonic transducer is undriven, preferably after the excitation of the oscillating system has been stopped. This means, preferably in a first step an excitation signal is injected to an ultrasonic transducer, and immediately after stopping the excitation signal a voltage signal on the ultrasonic transducer is sampled to determine the ringdown behaviour or ringdown curve.

According to a further possible embodiment the analysing module is configured such that it calculates at least one characteristic value representing the damping of the at least one ultrasonic transducer and for example representing the ringdown behaviour as an expression for the damping. The characteristic value for example may be a Quality factor Q or Q-Factor, respectively, and/or the resonance frequency of the oscillating system comprising the ultrasonic transducer. The Quality factor or Q-Factor is well known in the art for describing oscillating systems. It is the inverse of the damping ( $Q = \frac{1}{2\xi}$ wherein $\xi$ is the damping) and it can be defined in several ways. In the meaning of the present invention the Quality factor Q preferably is a dimensionless parameter describing how underdamped an oscillator or resonator is. A high value of the Quality factor Q thereby indicates a lower rate of energy loss so that oscillations die out more slowly. In principle, looking at the Quality factor Q makes it possible to distinguish between for example different states of the medium or liquid inside the flow channel, which states for example may be filled and empty.

According to a further preferred embodiment the analysing module is configured such that it calculates at multiple times a characteristic value representing the damping and for example the ringdown behaviour, in particular a characteristic value as previously discussed, and determines a statistical dispersion of this characteristic value. By such a statistical analysis a temperature influence can be compensated. Such temperature influence arises when the ambient temperature or the inlet fluid temperature changes. Normally the characteristic value would be calculated at a first temperature and later at a second temperature but if the temperature e.g. has increased between the two measurements this makes a correct calculation of the characteristic value difficult. The Applicant found that using a mean value of the characteristic value is very dependent on the temperature whereas using the dispersion of the characteristic value around its mean is much more insensitive. The dispersion approach eliminates advantageously this undesired temperature impact. Furthermore, on the basis of the dispersion, for example the dispersion of the Quality factor Q, it is possible to precisely differentiate between different states of the medium, for example between dry running and cavitation. The dispersion of the characteristic value, for example the Quality factor Q is different for different states of the medium or liquid, such as cavitation and dry running.

According to a further possible embodiment, to detect cavitation of the medium in the flow channel, preferably the analysing module is configured such that it identifies a state of cavitation if a determined dispersion is above a predefined dispersion threshold. In the state of cavitation, the dispersion of the Quality factor Q, for example, is higher than in the state of dry running or normal operation, i.e. when the flow channel is filled with liquid, for example filled with water. To differentiate between a state of condition in which the flow channel is filled with water and a state of condition in which the flow channel is dry it may be sufficient to just study the characteristic value, for example the Quality factor Q. In state of normal operation when the flow channel is filled with liquid there is a higher damping factor, i.e. a lower Q-Factor than in a dry, i.e. air filled condition. The analysing module may be configured to evaluate both, a dry running condition and the state of cavitation, by considering both the dispersion of the characteristic value and the characteristic value itself.

According to a further possible embodiment the processing unit and the analysing module are configured such that for evaluating the damping at least one voltage signal from the at least one ultrasonic transducer is sampled when a flow rate measurement has been stopped. This means the evaluation of the damping, for example by analysing the ringdown behaviour, is carried out when the flow measurement is paused. Furthermore, the processing unit and the analysing module in a further embodiment may be configured such that for the evaluation of the damping at least one voltage signal from the at least one ultrasonic transducer is sampled multiple times immediately after the ultrasonic transducer has stopped sending a flow rate measurement signal and/or multiple times immediately after an oscillation-test-signal has been sent by the ultrasonic transducer. This means in the first embodiment, the ringing measured and analysed is the one following on the ultrasonic transducer just after a flow rate measurement signal has been sent, i.e. following an excitation by the flow rate measurement signal. This embodiment has the advantage that battery power can be saved since no additional signal is required for the evaluation of the state of the medium. In an other embodiment a dedicated signal, i.e. the oscillation-test-signal for the purpose of detection of the state of the medium, for example detection of cavitation is used. This allows to customize the oscillation-test-signal for this purpose. In a further possible embodiment, it is possible to combine data of the ringing from a flow rate measurement signal with ringing data from a dedicated oscillation-test-signal. In all embodiments, however, preferably the electronic hardware which is already existing for the normal flow rate measurement is used for sampling the ringing signal.

Preferably, the analysing module is realized as a software module which is executed by the existing hardware of the processing unit. For executing of software programs or software scripts the processing unit may comprise for example a processor (CPU), memory means and other required electronic components. Preferably, these are the same hardware components which are used to execute the software required for performing the flow measurement.

Preferably the ultrasonic flow meter as described before is part of a fluid consumption meter. The fluid consumption meter calculates and records the fluid consumption on basis of a flow measurement performed by the ultrasonic flow meter as described.

Such a flow consumption meter may for example be used to record the water consumption at a consumer site, for example a building etc.

Besides the ultrasonic flow meter and the fluid consumption meter as described a method is subject of the present invention. The method according to the invention is provided for evaluating the state of a medium inside an ultrasonic flow meter, in particular an ultrasonic flow meter as previously described. Preferred embodiments of the ultrasonic flow meter as described above should be regarded as preferred embodiments of the method, too. Vice versa preferred embodiments of the method as described in the following should be regarded as preferred embodiments of the ultrasonic flow meter and the fluid consumption as described. According to the method of the invention at least one ultrasonic transducer located in the flow channel or on a wall of the flow channel of an ultrasonic flow meter is used to evaluate the state of a medium inside the flow channel. This is done by analysing a damping of the at least one ultrasonic transducer. The damping is different for different states of the medium. Therefore, by analysis of the damping it is possible to detect certain states of the medium, in particular possible cavitation. In a preferred embodiment a ringdown behaviour of the at least one ultrasonic transducer may be used as an expression of the damping.

According to a preferred embodiment of the method at least one characteristic value, which represents the damping is calculated at multiple times. In the following a statistic dispersion of this characteristic value can be determined. By this the influence of the temperature changes of the inlet fluid or the ambient temperature can be compensated or eliminated. As described above the dispersion of the characteristic value, for example a Quality factor Q is different for different states of the medium, in particular for cavitation and a normal state in which the flow channel is filled with liquid only.

Preferably a state of cavitation is determined if a determined dispersion is above a predefined dispersion threshold. There is a higher dispersion of the characteristic value, for example the dispersion of a Quality factor Q, in a state of cavitation compared to the state of normal operation or dry running. This difference can be defined by a suitable dispersion threshold.

The damping and for example the ringdown behaviour as an expression of the damping may be analysed by analysing or evaluating a signal strength and/or decay which is determined after the electrical excitation of the ultrasonic transducer has been stopped. This ensures that the state of the medium is evaluated when the flow measurement is paused. For evaluating the ringdown behaviour of the ultrasonic transducer the flow rate measurement signal used for flow measurement or a dedicated oscillation-test-signal may be used. Sampling a ringdown signal preferably is started immediately after the excitation has been terminated. For example, the ringdown behaviour as an expression for the damping, is analysed between two flow rate measurements.

In the following the invention is described by way of example with reference to the accompanying figures. In these:

Fig. 1 shows a schematical cross section of a flow consumption meter according to the invention.

Fig. 2 shows a part view of the flow meter of the flow consumption meter according to figure 1.

Fig. 3 schematically shows the ringing signal and the Quality factor Q over time for a first state of the medium.

Fig. 4 schematically shows the ringing signal and the Quality factor Q over time for a second state of the medium.

Fig. 5 schematically shows the ringing signal and the Quality factor Q over time for a third state of the medium.

Fig. 6 shows an example of a multitude of repeated calculations of a Quality factor Q for three different states of the medium.

Fig. 7 schematically shows the dispersion of the calculated Quality factor Q.

Fig.8 shows the impact of temperature on the calculated Qvalues.

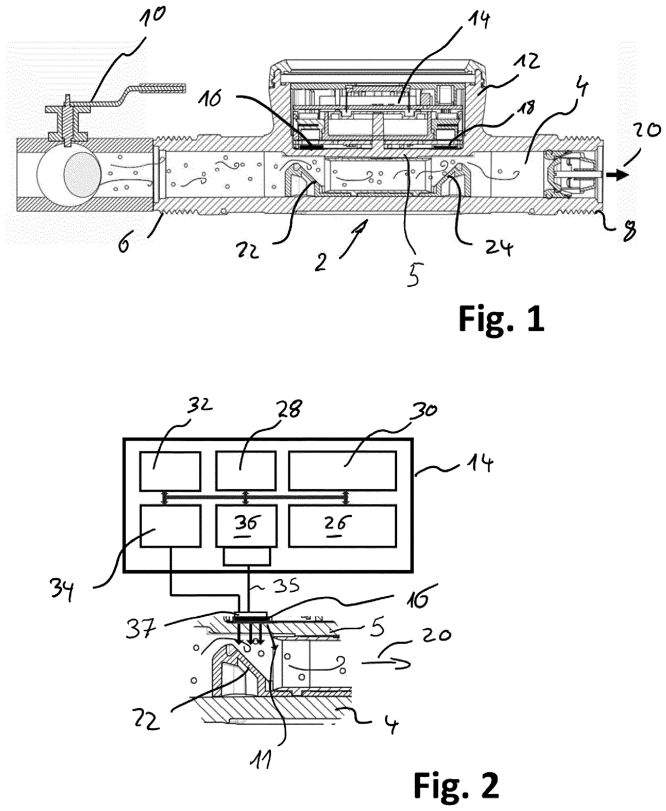

Figure 1 schematically shows a fluid consumption meter comprising an ultrasonic flow meter 2. The ultrasonic flow meter 2 comprises a flow channel 4 defined by a wall 5 and connecting an inlet connection 6 and an outlet connection 8. The inlet connection 6 and the outlet connection 8 are provided for connecting the consumption meter to a pipe system, for example a water supply pipe to record the water consumption.

In this example on the inlet side, i.e. upstream the inlet connection 6 in an inlet pipe, there is arranged a valve 10. Such a valve 10 may cause cavitation inside the medium flow through the flow channel 4.

Integrally connected to the flow channel 4 in this example there is an electronic housing 12 comprising a processing unit 14. In this example the processing unit 14 is connected to two ultrasonic transducers 16 and 18 which are arranged on the wall 5 of flow channel 4 in a distance from one another in the flow direction 20. Facing the two ultrasonic transducers 16 and 18 inside the flow channel there are arranged reflector elements 22 and 24 directing an ultrasonic signal from the ultrasonic transducer 16 in the flow direction and from the reflecting element 24 to the second ultrasonic transducer 18. Correspondingly a signal is sent in the opposite direction of the flow and by using the time-of-flight principle the flow is detected in a measurement section between the two transducers 16 and 18. On the basis of the ultrasonic signals received by the ultrasonic transducers 16, 18 the processing unit 14 calculates the flow and the fluid consumption.

Cavitation as for example caused by the valve 10 may impact such a flow measurement. Therefore, it is desirable to detect the state of the medium, for example water, inside the flow channel to identify the states of the medium which do not allow a correct flow measurement. Such a state may be signalized to a consumer or for example a water supply facility or the measurement may be paused. A state of cavitation could for example be signalized as a blinking LED on the flowmeter, an alert on an app of a smartphone or a timestamped entry in a register at the supply facility.

Figure 2 shows the processing unit 14 and the first ultrasonic transducer 16 in detail. The processing unit 14 comprises a microprocessor 26, a memory 28 and a power supply 30. Furthermore, the processing unit 14 may comprise a communication unit 32, for example a radio unit 32 which allows to transmit information on recorded consumption to a head end system. Furthermore, other information may be transmitted via the communication unit 32 towards an external control device or may be received from a head end system or an external control device. In this example, the processing unit 14 comprises a flow rate measurement unit 34 and a cavitation analysing unit 36. The flow rate measurement unit 34 and the cavitation analysing unit 36 may be provided as software modules executed in the processing unit 14 by the microprocessor 26. The flow rate measurement unit 34 and the cavitation analysing unit 36 are connected to at least one of the ultrasonic transducers, in this example the ultrasonic transducer 16 via an electric connection 35. The flow rate measurement unit 34 and the cavitation analysing unit 36 are configured to send an excitation signal to the ultrasonic transducer 16, such that the ultrasonic transducer 16 outputs an ultrasonic signal. Furthermore, the flow rate measurement unit 34 and the cavitation analysing unit 36 can receive voltage signals from one of the ultrasonic transducers 16,18, in this example the ultrasonic transducer 16. The ultrasonic transducers 16,18 may be piezo transducers. The damping and a damping constant of the oscillating system comprising the ultrasonic transducer 16 is determined by the combined characteristics of the components of the oscillator. The ultrasonic transducer itself has oscillator characteristics as has the fluid but also the wall 5 and a backing 37 of the transducer impacts the behaviour of the oscillator.

According to an embodiment of the invention the state of the medium inside the flow channel 4 is analysed on the basis of a ringing or ringdown signal. For this an excitation signal is send from the cavitation analysing unit 36 to the ultrasonic transducer 16, so that the transducer 16 outputs an ultrasonic signal towards the reflector 22. In a following step the excitation signal is stopped and immediately afterwards the ringing or ringdown voltage signal generated by the ultrasonic transducer 16 on the electric connection 35 is determined and analysed by the cavitation analysing unit 36. To determine the ringing signal the voltage generated by the transmitting ultrasonic transducer 16 is periodically sampled. By this a ringing or ringdown curve can be detected.

On the basis of this detected signal there is calculated a Quality factor Q or Q-factor. This is done in the following manner. The area below the ringing signal envelope is calculated as an expression of Q. The envelope of the decaying signal is giving by

$$ \mathcal{E}(t) = A_0 e^{-t/\tau} $$

wherein $A_0$ is the amplitude of the driving signal, t is the time. The time constant $\tau$ of the decaying signal is given by

$$ \tau = \frac{2Q}{\omega_N} $$

wherein $\omega_N$ is a natural frequency of the decaying oscillating signal and Q is the Quality factor.

The area under the envelope is proportional to the Q-factor:

$$ \int_0^\infty \mathcal{E}(t)\, dt = A_0 \tau \;\Rightarrow\; Q = \frac{\omega_N \int_0^\infty \mathcal{E}(t)\, dt}{2\, A_0}. $$

Thus, by adding the sampled envelope it is possible to calculate a good estimate of the integral and the Q-factor up to an arbitrary constant. In the meaning of the present invention when reference is made to the Q-factor or Quality factor Q it is this relative measurement and not a strictly true Q-factor.

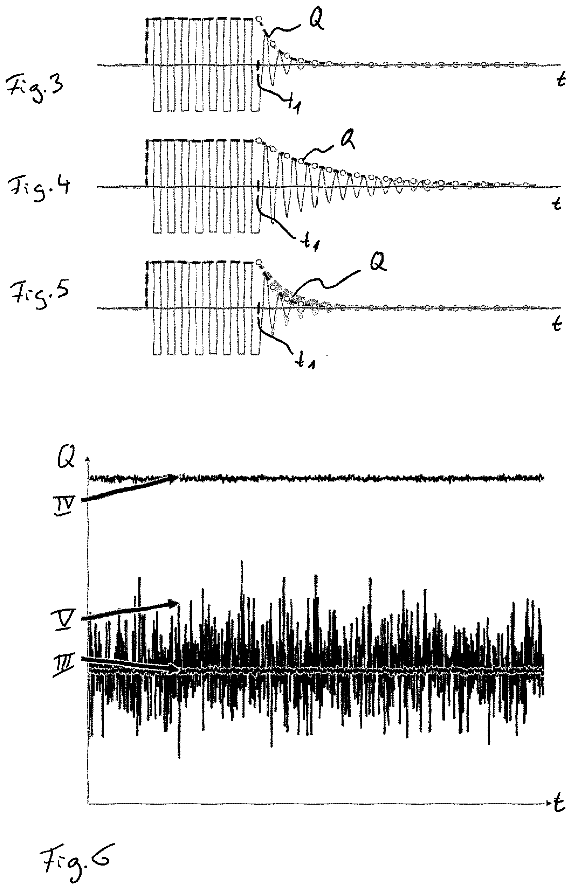

Figures 3 to 5 show three examples of the ringing signal and the related Quality factor Q plotted over time t. At the point in time $t_1$ the excitation signal is stopped and the ringing or ringdown starts. The excitation signal in this case is formed by rectangular pulses of the amplitude $A_0$ during this driven time-period of the ultrasonic transducer 16 which terminates at $t_1$. In one embodiment the excitation signal corresponds to the signal used for measuring the flow rate. In another embodiment the excitation signal is customized for a ringdown behaviour analysis and has for example more pulses than the excitation signal in flow rate measurement. At $t_1$ an undriven time-period starts and the voltage signal which can be measured on the ultrasonic transducers 16 decays and turns into a sinusoidal oscillation. The ultrasonic pressure waves 11 are facing an impedance consisting of a backing 37, the wall 5 of the flow channel 4 and the impedance of the medium or fluid in the flow channel 4 itself. If the fluid channel 4 is filled with fluid like water it is easy for the ultrasonic transducer 16 to get rid of its energy, which is radiated into the fluid. Once the driving signal or excitation signal is stopped at $t_1$ the cavitation analysing unit 36 starts sampling the ringing signal and the Quality factor Q is calculated. Depending on the state of the medium inside the flow channel 4 the resulting curves for the Quality factor Q are different. Figure 3 shows the curve for a water-filled flow channel 4. Figure 4 shows the curve for an air-filled flow channel 4, i.e. a state of dry-running. In this state there is a lower damping of the signal inside the flow channel 4 due to the lack of water and there is a slower decay of the oscillation. In case of cavitation which is shown in figure 5 the main decay wave is largely unchanged compared to the water-filled flow channel 4 as shown in figure 3. However, there is a much larger spread in the calculated Q values which is indicated in figure 5 by the different dashed curves Q. By analysing the statistical spread it is possible to distinguish between a normal state and a state of cavitation.

Figure 6 shows the Quality factor Q plotted over time for a multitude of measurements, for example 1000 measurements. For the different states of the medium different curves of the Quality factor Q can be identified. The curve IV is a curve for a state of dry-running as shown in figure 4. The curve V is a curve of the Quality factor Q for a state of cavitation as shown in figure 5. This curve has a much larger spread compared to the curve of normal operation which is shown as a curve III in figure 6. The curve III of normal operation corresponds to a ringing curve as shown in figure 3. In this state of the medium the flow channel 4 is filled with water without bubbles inside, i.e. a state with substantially no cavitation. The signal according to curve IV has a similar low spread, however, the Quality factor Q for the dry-running is higher than for the water-filled condition as shown by curve III. Thus, by analysing the Quality factor Q and the spread of the Quality factor Q it is possible to distinguish between three different states of the medium or liquid flowing through the flow channel 4, namely normal operation, dry-running and cavitation.

For evaluating the spread of the Quality factor Q a dispersion $\sigma_Q$ is calculated, for example by use of the following formula:

$$\sigma_Q = \frac{1}{N} \sum_{i=2}^{N} |Q_i - Q_{i-1}|$$

wherein N is the sample size.

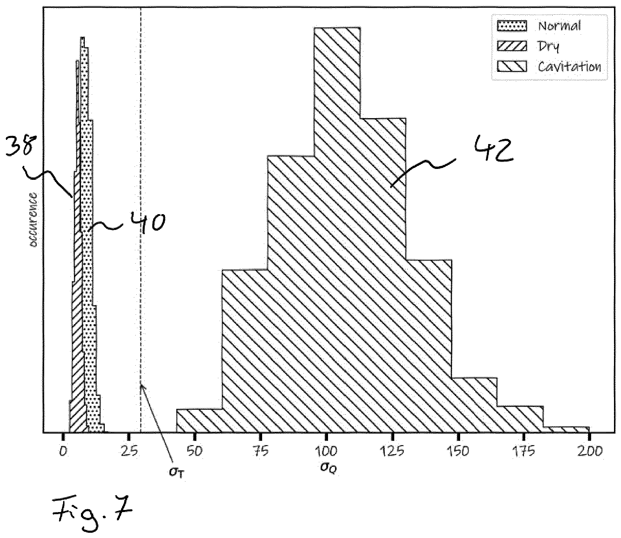

Figure 7 illustrates the distribution of the dispersion of the Q-factor calculated in this way. The diagram shows the dispersion for the three different states of the medium, the dispersion 38 for a dry state of the flow channel 4, the dispersion 40 the normal condition, i.e. when the flow channel 4 is filled with fluid without cavitation and the dispersion 42 for a state of cavitation. It can be seen that the dispersion $\sigma_Q$ is much higher in a state of cavitation. Thus, it is possible to identify cavitation if the dispersion $\sigma_Q$ is higher than a predefined dispersion threshold $\sigma_T$. This analysis is done by the processing unit 14.

As can be seen from figure 7 the dispersion $\sigma_Q$ for the normal state and the dry state are similar, however, these states can be differentiated on basis of the different magnitude of the Quality factor Q as described before.

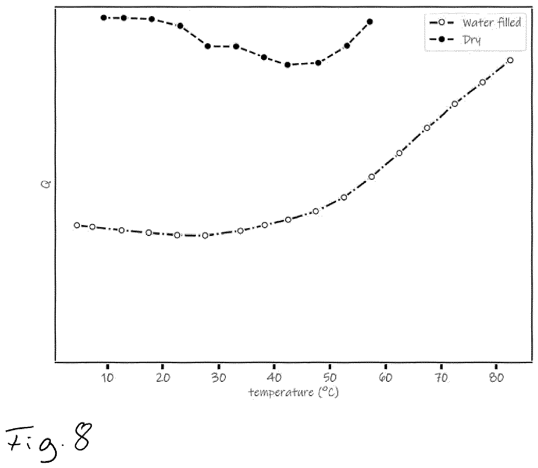

Figure 8 shows the calculated value of the Quality factor Q as a function of temperature. The Q value of the dry meter is a function of ambient temperature and the Q value of the water filled meter is a function of the inlet fluid temperature. The Q value of the water filled flow meter 2 is strongly impacted by the temperature of the inlet fluid from 40°C and upwards and at very high temperatures the Quality factor has the same value as the dry meter. Thus, the naked Quality factor is not unambiguous because the same Q value can relate to a dry state or a water filled state of the flow meter. Therefore, in order to reduce the impact of temperature, the approach of using a statistical dispersion of Q has been introduced.

Above a method of mathematically integrating the envelope of an oscillation after the driving force has been removed has been described and used as an expression of the damping of an ultrasonic transducer 16. A different method is to measure the shift in the oscillation frequency $\omega$ from the natural frequency $\omega_N$. From this, Q is obtained by

$$Q = \frac{1}{2\sqrt{1 - \omega^2/\omega_N^2}}.$$

Yet another option is to drive the oscillation of the ultrasonic transducer 16 with a sinusoidal driving force. For a driving force given by $f(t) = f_0 \, cos(\omega_d t)$, where $f(t)$ is the driving force, $f_0$ is the amplitude of the driving force and $\omega_d$ is the driving frequency, the amplitude $A$ of the oscillation of the ultrasonic transducer 16 is given by

$$A^2 = \frac{f_0^2}{\left(\omega_0^2 - \omega_d^2\right)^2 + 4\beta^2\omega^2}.$$

Thus, it is possible to estimate a damping $\beta$ since the amplitude A decreases with increasing damping. The above proposed methods to estimate the damping are not exhaustive, other approaches are possible.

Multiple embodiments of the invention are possible. In one embodiment the ringdown behaviour relating to one ultrasonic transducer 16, 18 is compared to the ringdown behaviour of an adjacent ultrasonic transducer 16, 18 in the flow meter 2. If the ringdown behaviours differ from each other this may be an indication of a malfunctioning or ageing ultrasonic transducer 16, 18. In a further embodiment the calculated Q factor is associated with a time stamp. This enables the analysis of cause and effect of upstream pipe events and the appearance of cavitation in the ultrasonic flow meter. In an even further embodiment the analysis of the ringdown behaviour of the ultrasonic transducer is used to determine the viscosity of the medium flowing in the flow tube. A high viscosity medium will cause a lower Q factor than a low viscosity medium.

If the invention is used in ultrasonic flow meters used in district heating networks the ringdown behaviour can be used as a fingerprint of the state of the heating medium. This medium is classified as technical water because it comprises additives such as for example corrosion inhibitors. If the composition of the technical water changes over time the ring down behaviour will also change and thus be an indicator of changes in the composition of the technical water.

**List of reference numerals**

| | |
|---|---|
| 2 | ultrasonic flow meter |
| 4 | flow channel |
| 5 | wall |
| 6 | inlet connection |
| 8 | outlet connection |
| 10 | valve |
| 11 | ultrasonic pressure waves |
| 12 | electronic housing |
| 14 | processing unit |
| 16,18 | ultrasonic transducer |
| 20 | flow direction |
| 22,24 | reflector elements |
| 26 | microprocessor |
| 28 | memory |
| 30 | power supply |
| 32 | communication unit |
| 34 | flow rate measurement unit |
| 35 | electric connection |
| 36 | cavitation analysing unit |
| 37 | backing |
| 38 | dispersion of Q for a dry state |
| 40 | dispersion of Q for a normal state |
| 42 | dispersion of Q for a state of cavitation |
| Q | Quality factor |
| $\sigma_Q$ | dispersion of Quality factor Q |
| $\sigma_T$ | dispersion threshold |

**Claims**

1.  Ultrasonic flow meter (2) comprising a flow channel (4), at least one ultrasonic transducer (16,18) located in the flow channel or on a wall (5) of the flow channel (4) and a processing unit (14) connected to this at least one ultrasonic transducer (16,18), the processing unit (14) being configured such that it controls the at least one ultrasonic transducer (16,18), **characterized in that**

the processing unit (14) comprises an analysing module (36) being configured such that it evaluates the state of a medium inside the flow channel (4) by analysing a damping of an electrical signal of the at least one ultrasonic transducer (16,18).

2.  Ultrasonic flow meter (2) according to claim 1, **characterized in that** the analysing module (36) is configured such that a ringdown behaviour of the at least one ultrasonic transducer (16, 18) is used for analysing the damping.

3.  Ultrasonic flow meter (2) according to claim 1 or 2, **characterized in that** the analysing module (36) is configured such that a shift in an oscillation frequency ($\omega$) from the natural frequency ($\omega_N$) is used for analysing the damping.

4.  Ultrasonic flow meter (2) according to one of the preceding claims, **characterized in that** the analysing module (36) is configured such that for analysing the damping the at least one ultrasonic transducer is excited with a sinusoidal drive signal (f(t)) and a change in the amplitude (A) of an electric response signal from the at least one ultrasonic transducer (16, 18) is used for analysing the damping.

5.  Ultrasonic flow meter (2) according to one of the preceding claims, **characterized in that** said analysing module (36) is configured such that it samples voltage signals from the at least one ultrasonic transducer (16,18) and analyses the damping on basis of these sampled signals.

6.  Ultrasonic flow meter (2) according to one of the preceding claims, **characterized in that** the analysing module (36) is configured such that it analyses the damping by analysing a signal strength and/or decay of a voltage signal from said ultrasonic transducer (16,18).

7.  Ultrasonic flow meter (2) according to one of the preceding claims, **characterized in that** the analysing module (36) is configured such that it calculates at least one characteristic value representing the damping, preferably a Quality factor (Q) and/or the resonance frequency of the oscillating system.

8.  Ultrasonic flow meter (2) according to one of the preceding claims, **characterized in that** the analysing module (36) is configured such that it calculates a characteristic value representing the damping at multiple times and determines a dispersion of this characteristic value.

9.  Ultrasonic flow meter (2) according to one of the preceding claims, **characterized in that** the state of the medium is a state of cavitation of the medium in the flow channel (4), and that preferably the analysing module is configured such that it determines a state of cavitation if a determined dispersion is above a predefined dispersion threshold ($\sigma_T$).

10. Ultrasonic flow meter (2) according to one of the preceding claims, **characterized in that** the processing unit (14) and the analysing module (36) are configured such that for the evaluation of the damping at least one signal from the at least one ultrasonic transducer (16,18) is sampled when a flow rate measurement has been stopped.

11. Ultrasonic flow meter (2) according to one of the preceding claims, **characterized in that** the processing unit (14) and the analysing module (36) are configured such that for the evaluation of the damping at least one signal from the at least one ultrasonic transducer (16,18) is sampled immediately after the ultrasonic transducer (16,18) hast stopped sending a flow rate measurement signal and/or after an oscillation-test-signal has been sent by the ultrasonic transducer (16,18).

12. Fluid consumption meter **characterized in that** it comprises an ultrasonic flow meter (2) according to one of the preceding claims.

13. Method for evaluating the state of a medium inside an ultrasonic flow meter (2), the flow meter (2) comprising a flow channel (4) and at least one ultrasonic transducer (16,18) located in the flow channel (4) or on a wall (5) of the flow channel (4),
    **characterized by**
    analysing a damping of the at least one ultrasonic transducer (16,18).

14. Method according to claim 13, **characterized by** calculating at least one characteristic value representing the damping at multiple times and determining a dispersion of this characteristic value.

15. Method according to claim 14, **characterized by** determining a state of cavitation if a determined dispersion is above a predefined dispersion threshold ($\sigma_T$).

16. Method according to one of the claims 1 to 15, **characterized by** using a ringdown behaviour of the at least one ultrasonic transducer (16, 18) as an expression of the damping.

17. Method according to one of the claims 13 to 16, **characterized in that** for analysis of the damping, preferably the ringdown behaviour as an expression for the damping, a signal strength and/or decay are analysed, which are determined after the excitation of the ultrasonic transducer (16,18) has been stopped.

18. Method according to one of the claims 13 to 17, **characterized in that** the damping, preferably the ringdown behaviour as an expression for the damping, is analysed between two flow rate measurements.

**Fig. 1**

**Fig. 2**

Fig. 3

Fig. 4

Fig. 5

Fig. 6

Fig. 7

Fig. 8

Europäisches
Patentamt

European
Patent Office

Office européen
des brevets

# EUROPEAN SEARCH REPORT

Application Number

EP 23 20 5171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 112 823 A1 (KAMSTRUP AS [DK]) 4 January 2017 (2017-01-04) | 1,9-13, 15,18 | INV. G01F1/667 |
| Y | * paragraphs [0070], [0071], [0093], [0094]; figure 4 * ----- | 2-8,14, 16,17 | G01F25/10 |
| Y | US 2023/221422 A1 (CARMINATI FRANCESCA [IT] ET AL) 13 July 2023 (2023-07-13) * paragraphs [0046] - [0047], [0056], [0108]; figure 2 * ----- | 2-8,14, 16,17 | ADD. G01F1/66 |

TECHNICAL FIELDS
SEARCHED      (IPC)

G01F
H04R

The present search report has been drawn up for all claims

| Place of search | Date of completion of the search | Examiner |
|---|---|---|
| The Hague | 13 March 2024 | Decaix, François |

EPO FORM 1503 03.82 (P04C01)

## ANNEX TO THE EUROPEAN SEARCH REPORT
## ON EUROPEAN PATENT APPLICATION NO.

**EP 23 20 5171**

This annex lists the patent family members relating to the patent documents cited in the above-mentioned European search report.
The members are as contained in the European Patent Office EDP file on
The European Patent Office is in no way liable for these particulars which are merely given for the purpose of information.

**13-03-2024**

| Patent document cited in search report | Publication date | Patent family member(s) | Publication date |
|---|---|---|---|
| EP 3112823 A1 | 04-01-2017 | NONE | |
| US 2023221422 A1 | 13-07-2023 | CN 116550585 A | 08-08-2023 |
| | | EP 4212909 A1 | 19-07-2023 |
| | | US 2023221422 A1 | 13-07-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102017011201 B4